# EUROPEAN PATENT APPLICATION

(11) **EP 4 060 586 A1**
(43) Date of publication of application: **21.09.2022**
(21) Application number: 20899619.9
(22) Date of filing: 11.12.2020
(51) Int. Cl.: G06Q 20/32

(54) **VOICE PAYMENT METHOD AND ELECTRONIC DEVICE**

(30) Priority: 12.12.2019 CN 201911272339
(71) Applicant: Huawei Technologies Co., Ltd., Shenzhen, Guangdong 518129 (CN)
(72) Inventor: LIU, Hao, Shenzhen, Guangdong 518129 (CN); ZHUANG, Zhishan, Shenzhen, Guangdong 518129 (CN); LI, Guoqi, Shenzhen, Guangdong 518129 (CN)
(74) Representative: Epping - Hermann - Fischer
(86) International application number: PCT/CN2020/135652
(87) International publication number: WO 2021/115424

(57) **Abstract**

A voice payment method and an electronic device are provided. The method includes: A first electronic device receives voice information of a user, where the voice information is used to indicate a payment operation performed by the user; when a voiceprint feature of the voice information meets a preset condition, the first electronic device requests a second electronic device to authenticate the user; the second electronic device prompts the user to perform an authentication process, where the authentication process includes one or more of fingerprint authentication, facial recognition, password authentication, verification code authentication, and near field communication NFC authentication; when authentication performed by the second electronic device on the user succeeds, the second electronic device indicates to the first electronic device that authentication performed by the second electronic device on the user succeeds; and the first electronic device completes the payment operation with a payment platform. The voice payment method helps improve voice payment security, and may be applied to an electronic device such as an artificial intelligent terminal.

## Description

This application claims priority to Chinese Patent Application No. 201911272339.6, filed with the China National Intellectual Property Administration on December 12, 2019 and entitled "VOICE PAYMENT METHOD AND ELECTRONIC DEVICE", which is incorporated herein by reference in its entirety.

### TECHNICAL FIELD

This application relates to the field of electronic devices, and more specifically, to a payment method and an electronic device.

### BACKGROUND

Mobile payment has become an indispensable part of everyone's life: Based on the "Overall Operation of the Payment System in the Fourth Quarter of 2018" released by the People's Bank of China, mobile payment continues to make great strides in 2018, there are 605.3 billion mobile payment services, an amount is 277.4 trillion yuan, year-on-year growth is respectively 61.2% and 36.7%, and a quantity of transactions and an transaction amount exceed a growth rate of 2017 again.

However, in this case, although a voice control system becomes increasingly popular, for a smart speaker that has gradually become a home control and entertainment center, there is a huge potential security risk in a conventional voice interaction manner used for the speaker, and consequently, voice payment performed by using the smart speaker has not been mature and cannot be put into the market. Manufactures such as Alibaba, Baidu, and Amazon are all trying to launch voice payment, but an actual effect is not ideal, and a large quantity of error break events occur. How to improve speaker-based voice payment security becomes an urgent problem to be resolved.

### SUMMARY

This application provides a voice payment method and an electronic device, to help improve voice payment security. The voice payment method in embodiments of this application may be applied to an electronic device such as an artificial intelligent terminal.

According to a first aspect, a system is provided. The system includes a first electronic device and a second electronic device, and the first electronic device and the second electronic device are associated by using a cloud server. The first electronic device is configured to receive first voice information of a user. The first voice information is used to indicate a payment operation performed by the user. When a voiceprint feature of the first voice information meets a preset condition, the first electronic device is further configured to send request information to the second electronic device. The request information is used to request the second electronic device to authenticate the user. The second electronic device is configured to prompt, based on the request information, the user to perform an authentication process. The authentication process includes one or more of fingerprint authentication, facial recognition, password authentication, verification code authentication, and near field communication NFC authentication. When authentication performed by the second electronic device on the user succeeds, the second electronic device is further configured to send response information to the first electronic device. The response information is used to indicate that authentication performed by the second electronic device on the user succeeds. The first electronic device is further configured to complete the payment operation with a payment platform based on the response information. In this embodiment of this application, after voiceprint authentication performed by the first electronic device on the user succeeds, the first electronic device may continue to request the second electronic device with a higher degree of privacy and higher biometric recognition security to authenticate the user. The second electronic device may authenticate the user in one or more authentication manners in print authentication, facial recognition, password authentication, verification code authentication, and near field communication NFC authentication. After authentication performed by the second electronic device on the user succeeds, the first electronic device completes the payment operation with the payment platform, to help improve voice payment security.

In some possible implementations, the first electronic device and the second electronic device may perform direct communication by using a near field communication technology such as Bluetooth, or perform indirect communication by using the cloud server.

With reference to the first aspect, in some implementations of the first aspect, the request information includes information about a commodity corresponding to the payment operation, and the second electronic device is further configured to: before sending the response information to the first electronic device, determine that the user authorizes payment for the commodity.

In this embodiment of this application, the user may select, on the second electronic device, a commodity that needs to be authorized. When the second electronic device authenticates the user, the second electronic device may determine the information about the commodity from the request information, to determine whether the user authorizes a payment operation for the commodity. This helps improve voice payment security, to further ensure property security of the user.

With reference to the first aspect, in some implementations of the first aspect, the request information includes a payment amount of the commodity, and the second electronic device is further configured to: before sending the response information to the first electronic device, determine that the payment amount falls within a preset limit.

In this embodiment of this application, after determining that the user authorizes the commodity, the second electronic device may further determine the payment amount of the commodity from the request information, to determine whether the payment amount falls within a limit authorized by the user. This helps improve voice payment security, to further ensure property security of the user.

In some possible implementations, the preset limit includes a single-time payment limit and a single-day payment limit.

With reference to the first aspect, in some implementations of the first aspect, the authentication process includes NFC authentication, and the first electronic device stores identification information of the second electronic device. The first electronic device is further configured to prompt the user to move the second electronic device close to the first electronic device. The second electronic device is further configured to send a verification message to the first electronic device through NFC. The verification message includes first identification information. The first electronic device is further configured to send a verification response to the second electronic device when the first identification information is the same as the identification information of the second electronic device. The verification response is used to indicate that authentication performed on an identifier of the second electronic device succeeds.

In this embodiment of this application, the second electronic device may authenticate the user through an NFC physical touch. In this way, a cumbersome operation performed by the user on the second electronic device can be avoided, and authentication can be completed only by moving the second electronic device close to the first electronic device. This helps simplify an operation performed by the user during voice payment, to improve user experience when voice payment security is ensured.

With reference to the first aspect, in some implementations of the first aspect, the first electronic device is further configured to randomly generate verification information before sending the request information to the second electronic device; the first electronic device is further configured to send second voice information to the user, where the second voice information is used to prompt the user to repeat the verification information; the first electronic device is further configured to receive third voice information sent by the user, where the third voice information includes the verification information; and the first electronic device is further configured to determine that a voiceprint feature of the third voice information meets the preset condition.

In this embodiment of this application, after determining that the voiceprint feature of the first voice information of the user meets the preset condition, the second electronic device may further prompt the user to repeat the verification information (for example, a random digit or a random letter). This helps prevent a criminal from simulating a voiceprint in a recording-playing manner, to help improve voice payment security.

With reference to the first aspect, in some implementations of the first aspect, the first electronic device is further configured to: before randomly generating the verification information, prompt the user to enter the verification information.

With reference to the first aspect, in some implementations of the first aspect, the verification information includes a digit and/or a letter.

With reference to the first aspect, in some implementations of the first aspect, the first electronic device is a smart speaker.

According to a second aspect, a voice payment method is provided. The method is applied to a first electronic device, and the method includes: A first electronic device receives first voice information of a user, where the first voice information is used to indicate a payment operation performed by the user; when a voiceprint feature of the first voice information meets a preset condition, the first electronic device sends request information to a second electronic device, where the request information is used to request the second electronic device to authenticate the user; the first electronic device receives response information sent by the second electronic device, where the response information is used to indicate that authentication performed by the second electronic device on the user succeeds; and the first electronic device completes the payment operation with a payment platform.

In this embodiment of this application, after voiceprint authentication performed by the first electronic device on the user succeeds, the first electronic device may continue to request a second electronic device with a higher degree of privacy and higher biometric recognition security to authenticate the user. After authentication performed by the second electronic device on the user succeeds, the first electronic device completes the payment operation with the payment platform, to help improve voice payment security.

In some possible implementations, the second electronic device may authenticate the user in one or more authentication manners in print authentication, facial recognition, password authentication, verification code authentication, and near field communication NFC authentication.

With reference to the second aspect, in some implementations of the second aspect, the request information includes information about a commodity corresponding to the payment operation.

The information about the commodity is used by the second electronic device to determine whether the user authorizes a payment operation for the commodity.

With reference to the second aspect, in some implementations of the second aspect, the request information further includes a payment amount of the commodity.

The payment amount is used by the second electronic device to determine whether the payment amount falls within a payment limit.

With reference to the second aspect, in some implementations of the second aspect, the first electronic device stores identification information of the second electronic device, and before the first electronic device receives the response information sent by the second electronic device, the method further includes: prompting the user to move the second electronic device close to the first electronic device; receiving, through NFC, a verification message sent by the second electronic device, where the verification message includes the first identification information; and sending a verification response to the second electronic device when the first identification information is the same as the identification information of the second electronic device, where the verification response is used to indicate that authentication performed on an identifier of the second electronic device succeeds.

In this embodiment of this application, the second electronic device may authenticate the user through an NFC physical touch. In this way, a cumbersome operation performed by the user on the second electronic device can be avoided, and authentication can be completed only by moving the second electronic device close to the first electronic device. This helps simplify an operation performed by the user during voice payment, to improve user experience when voice payment security is ensured.

With reference to the second aspect, in some implementations of the second aspect, before the first electronic device sends the request information to the second electronic device, the method further includes: The first electronic device randomly generates verification information; the first electronic device sends second voice information to the user, where the second voice information is used to prompt the user to repeat the verification information; the first electronic device receives third voice information sent by the user, where the third voice information includes the verification information; and the first electronic device determines that a voiceprint feature of the third voice information meets the preset condition.

In this embodiment of this application, after determining that the voiceprint feature of the first voice information of the user meets the preset condition, the second electronic device may further prompt the user to repeat the verification information (for example, a random digit or a random letter). This helps prevent a criminal from simulating a voiceprint in a recording-playing manner, to help improve voice payment security.

With reference to the second aspect, in some implementations of the second aspect, before the first electronic device randomly generates the verification information, the method further includes: The first electronic device prompts the user to enter the verification information.

With reference to the second aspect, in some implementations of the second aspect, the verification information includes a digit and/or a letter.

According to a third aspect, an apparatus is provided. The apparatus is included in an electronic device, and the apparatus has a function of implementing the behavior of the electronic device in the foregoing aspects and the possible implementations of the foregoing aspects. The function may be implemented by using hardware, or may be implemented by hardware executing corresponding software. The hardware or the software includes one or more modules or units corresponding to the foregoing functions.

According to a fourth aspect, an electronic device is provided, and includes one or more processors, a memory, and one or more computer programs. The one or more computer programs are stored in the memory, and the one or more computer programs include instructions. When the instructions are executed by the electronic device, the electronic device is enabled to perform the voice payment method in any possible implementation of the second aspect. According to a fifth aspect, this technical solution provides a computer storage medium, including computer instructions. When the computer instructions run on an electronic device, the electronic device is enabled to perform the voice payment method in any possible implementation of the second aspect.

According to a sixth aspect, this technical solution provides a computer program product. When the computer program product runs on an electronic device, the electronic device performs the voice payment method in any possible design of the second aspect.

According to a seventh aspect, this technical solution provides a chip system. The chip system includes at least one processor, and when program instructions are executed by the at least one processor, a function of an electronic device in any possible method in the second aspect is implemented.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) to FIG. 3(b) show a group of GUIs according to an embodiment of this application;
FIG. 4(a) to FIG. 4(d) show another group of GUIs according to an embodiment of this application;
FIG. 5(a) to FIG. 5(c) show another group of GUIs according to an embodiment of this application;
FIG. 6(a) to FIG. 6(d) show another group of GUIs according to an embodiment of this application;
FIG. 7(a) to FIG. 7(c) show another group of GUIs according to an embodiment of this application;
FIG. 8(a) to FIG. 8(c) show another group of GUIs according to an embodiment of this application;
FIG. 9(a) to FIG. 9(d) show another group of GUIs according to an embodiment of this application;
FIG. 10(a) to FIG. 10(c) show another group of GUIs according to an embodiment of this application;
FIG. 11(a) and FIG. 11(b) show another group of GUIs according to an embodiment of this application;
FIG. 12 is a schematic flowchart of a voiceprint registration method according to an embodiment of this application;
FIG. 13 is a schematic flowchart of performing voice payment by using a speaker according to an embodiment of this application; and
FIG. 14 is a schematic flowchart of a voice payment method according to an embodiment of this application.

### DESCRIPTION OF EMBODIMENTS

Terms used in the following embodiments are merely intended to describe particular embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" or "one or more" means one, two, or more. The term "and/or" is used to describe an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but is not limited to", unless otherwise specifically emphasized.

The following describes an electronic device, a user interface used for the electronic device, and embodiments used for using the electronic device. In some embodiments, the electronic device may be a portable electronic device that further includes another function such as a personal digital assistant function and/or a music player function, for example, a mobile phone, a tablet computer, or a wearable electronic device (for example, a smartwatch or the like) having a wireless communications function. An example embodiment of the portable electronic device includes but is not limited to a portable electronic device provided with iOS^{®}, Android^{®}, Microsoft^{®}, or another operating system. The portable electronic device may alternatively be another portable electronic device, for example a laptop (laptop) or the like. It should be further understood that, in some other embodiments, the foregoing electronic device may not be the portable electronic device but a desktop computer.

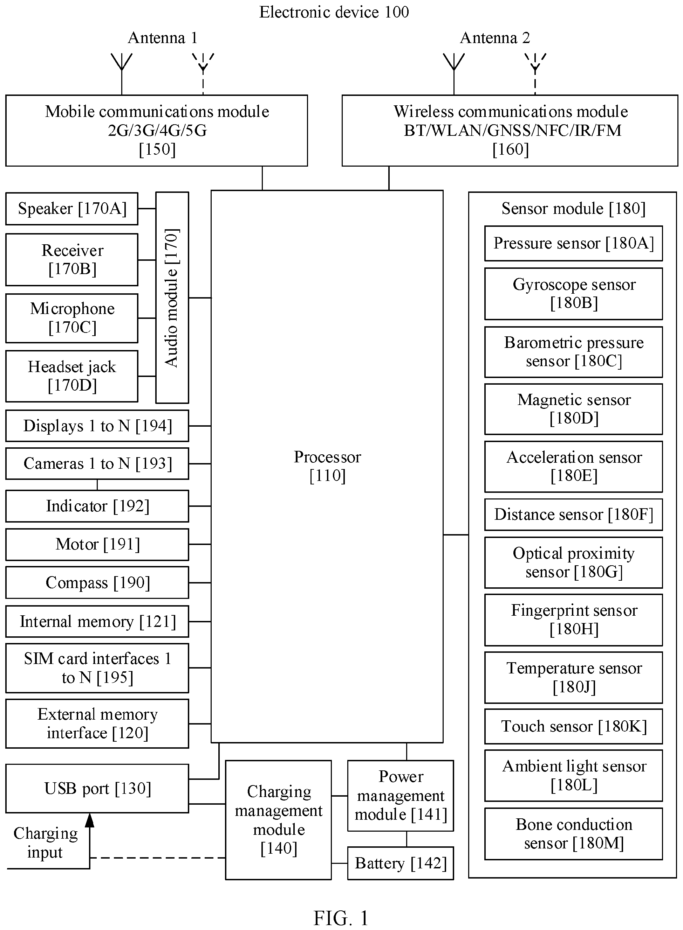

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction fetching and instruction execution. In some other embodiments, a memory may further be disposed in the processor 110, to store instructions and data. For example, the memory in the processor 110 may be a cache. The memory may store instructions or data just used or cyclically used by the processor 110. If the processor 110 needs to use the instructions or the data again, the processor 110 may directly invoke the instructions or the data from the memory. In this way, repeated access is avoided, waiting time of the processor 110 is reduced, and efficiency of processing data or executing instructions by the electronic device 101 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB port, and/or the like. The USB port 130 is a port that conforms to a USB standard specification, and may be specifically a mini USB port, a micro USB port, a USB Type-C port, or the like. The USB port 130 may be configured to connect to a charger to charge the electronic device 101, or may be configured to transmit data between the electronic device 101 and a peripheral device. The USB port 130 may alternatively be configured to connect to a headset, and play audio by using the headset.

It may be understood that the interface connection relationship between the modules illustrated in this embodiment of this application is merely an example for description, and does not constitute a limitation on the structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communications function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 150 can provide a solution, applied to the electronic device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave by using the antenna 1 for radiation. In some embodiments, at least some function modules of the mobile communications module 150 may be disposed in the processor 110. In some embodiments, at least some function modules of the mobile communications module 150 may be disposed in the same device as at least some modules of the processor 110.

The wireless communications module 160 may provide a wireless communications solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 may be one or more components integrating at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a Mini-Led, a Micro-Led, a Micro-oLed, a quantum dot light-emitting diode (quantum dot light-emitting diode, QLED), or the like. In some embodiments, the electronic device 100 may include one or more displays 194.

In some embodiments of this application, when the display panel is made of a material such as the OLED, the AMOLED, or the FLED, the display 194 in FIG. 1 may be bent. Herein, that the display 194 may be bent means that the display may be bent to any angle at any part, and may be held at the angle. For example, the display 194 may be folded left and right from the middle. Alternatively, the display 194 may be folded up and down from the middle. The display 194 of the electronic device 100 may be a flexible screen. Currently, the flexible screen attracts much attention due to unique features and huge potential of the flexible screen. Compared with a conventional display, the flexible display has features of strong flexibility and bendability, and can provide a user with a new bendability-based interaction mode, to satisfy more requirements of the user on an electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of the camera through a lens. An optical signal is converted into an electrical signal. The photosensitive element of the camera transmits the electrical signal to the ISP for processing, and the electrical signal is converted into a visible image. The ISP may further perform algorithm optimization on noise, brightness, and a skin color of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. With reference to a structure of a biological neural network, for example, with reference to a transfer mode between neurons of a human brain, the NPU quickly processes input information, and can further continuously perform self-learning. Applications such as intelligent cognition of the electronic device 100, such as image recognition, facial recognition, speech recognition, and text understanding, can be implemented by using the NPU.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and videos are stored in the external memory card.

The internal memory 121 may be configured to store one or more computer programs, and the one or more computer programs include instructions. The processor 110 may run the instructions stored in the internal memory 121, so that the electronic device 101 performs the payment method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a non-volatile memory, for example, one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 101 to perform the payment method provided in embodiments of this application, other applications, and data processing. The electronic device 100 can implement audio functions, for example, a music playing function and a recording function, by using the audio module 170, the speaker 170A, the receiver 170B, the microphone 170C, the headset jack 170D, the application processor, and the like. <seg/>

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to the first pressure threshold is performed on a Messages application icon, an instruction for creating a new SMS message is executed.

The gyroscope sensor 180B may be configured to determine a motion posture of the electronic device 100. In some embodiments, an angular velocity of the electronic device 100 around three axes (that is, axes X, Y, and Z) may be determined by using the gyroscope sensor 180B. The gyroscope sensor 180B may be configured to perform image stabilization during photographing. For example, when the shutter is pressed, the gyroscope sensor 180B detects an angle at which the electronic device 100 shakes, calculates, based on the angle, a distance for which a lens module needs to compensate, and allows the lens to eliminate the shake of the electronic device 100 through reverse motion, to implement image stabilization. The gyroscope sensor 180B may also be used in a navigation scenario and a somatic game scenario.

The acceleration sensor 180E may detect accelerations in various directions (usually on three axes) of the electronic device 100, and may detect magnitude and a direction of gravity when the electronic device 100 is still. The acceleration sensor 180E may be configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100 at a position different from that of the display 194.

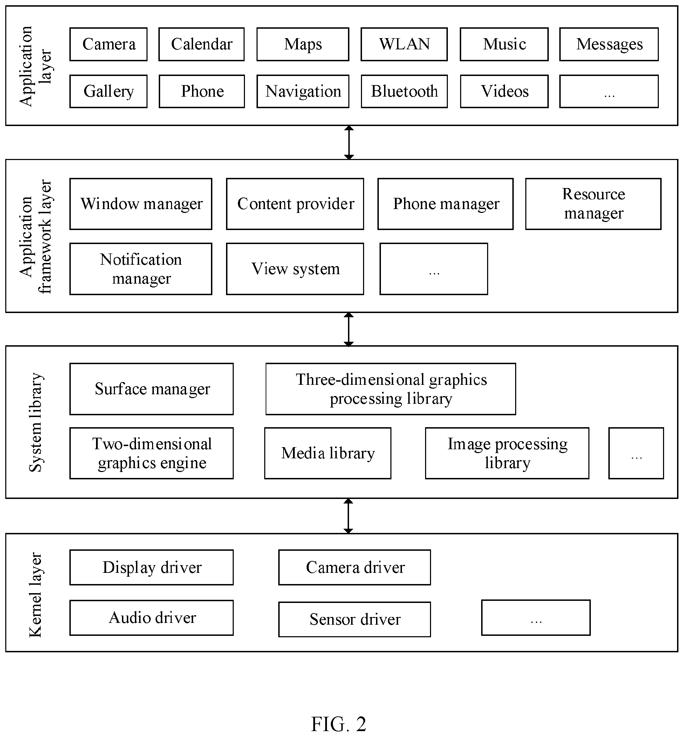

FIG. 2 is a block diagram of a software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to: store and obtain data, and enable the data to be accessed by an application. The data may include a video, an image, audio, calls that are made and received, a browsing history, a bookmark, an address book, and the like.

The view system includes visual controls such as a control for displaying a text and a control for displaying an image. The view system may be configured to construct an application. A display interface may include one or more views. For example, a display interface including a message notification icon may include a text display view and an image display view.

The phone manager is configured to provide a communication function of the electronic device 100, for example, management of a call status (including answering, declining, or the like).

The resource manager provides various resources for an application, such as a localized character string, an icon, an image, a layout file, and a video file.

The notification manager enables an application to display notification information in the status bar, and may be configured to convey a notification message. The notification manager may automatically disappear after a short pause without requiring a user interaction. For example, the notification manager is configured to provide notifications of download completing, a message prompt, and the like. The notification manager may be a notification that appears in a top status bar of the system in a form of a graph or a scroll bar text, for example, a notification of an application running on the background, or may be a notification that appears on the screen in a form of a dialog window. For example, text information is displayed in the status bar, an announcement is given, the electronic device vibrates, or an indicator light blinks.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of frequently used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before a payment method in embodiments of this application is described, several concepts related to embodiments of this application are first described.

False accept rate (false accept rate, FAR): When an object recognition algorithm is tested on a standard authentication database, a proportion of different objects that are considered as a same object because matching scores of the different objects are greater than a given threshold is simply referred to as a proportion of "objects that are not matched but are considered as matched objects". In a speaker-based voice payment scenario in embodiments of this application, the proportion may be understood as a probability that when an attacker performs voice interaction with a speaker, authentication performed by the speaker is broken, and an payment application is implemented.

Forgery attack: An attacker attacks a mobile phone of a consumer by using forged data of the consumer, to implement unlocking or a pay application. In a speaker-based voice payment scenario in embodiments of this application, for example, the attacker makes an attack by faking the consumer through recording and synthesis.

A dolphin attack (dolphin attack) is a method of hacking into a voice assistant by using an ultrasonic wave.

The dolphin attack is derived from a phenomenon that a dolphin can send an ultrasonic wave to attack a target shoal of fish for food. Such an attack is made with the help of the ultrasonic wave.

A near field communication (near field communication, NFC) technology is a contactless identification and interconnection technology in which near field communication is performed between a mobile device, consumer electronics, a personal computer (personal computer, PC), and an intelligent control tool. NFC is derived from a "contactless radio frequency identification" and interconnection technology between wireless devices, provides a simple touch-based solution for all consumer electronics, and allows a consumer to easily and intuitively exchange information, access content, and a service.

Bluetooth (Bluetooth) is a wireless technology standard, and may be used to implement a short-range data exchange between a fixed device, a mobile device, and a personal area network of a building (by using an ultra high frequency (ultra high frequency, UHF) radio wave on an industrial scientific and medical (industrial scientific medical, ISM) frequency band of 2.4 GHz to 2.485 GHz). Bluetooth may connect a plurality of devices, overcoming a data synchronization problem.

An existing payment manner such as password verification, fingerprint verification, facial recognition, a digital certificate, or a dynamic password that meets a commercial standard is not applicable to a screenless device, for example, a speaker. In a voice interaction manner most commonly used for the speaker, namely, a voiceprint biometric recognition technology, simulation, recording replication, a dolphin attack, or the like easily occurs due to a high false accept rate, and consequently, a security level required by a payment level cannot be reached. Embodiments of this application provide a method for supporting high-security speaker-based voice payment by performing multi-device linkage to perform multi-authentication and verification. The voice payment method in embodiments of this application may support the speaker to complete payment behaviors such as online shopping, a WeChat transfer, an Alipay transfer, a bank transfer, and mobile recharge.

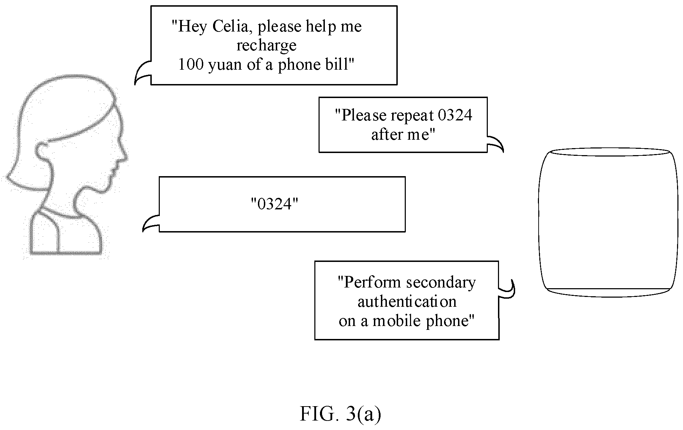

FIG. 3(a) to FIG. 3(b) show a group of graphical user interfaces (graphical user interface, GUI) according to an embodiment of this application.

As shown in FIG. 3(a), a user sends a voice instruction "Hey Celia, please help me recharge 100 yuan of a phone bill" to a speaker. After receiving the voice instruction from the user, the speaker may return "Please repeat 0324 after me" to the user. In this embodiment of this application, the speaker may request the user to repeat a group of random digits, to prevent, to some extent, a criminal from simulating a voiceprint of the user in a recording-playing manner.

After receiving a repeating request from the speaker, the user may repeat "0324". After receiving "0324" read by the user, the speaker may verify the voiceprint of the user. After verification succeeds, the speaker may prompt the user with "Perform secondary authentication on a mobile phone".

It should be understood that, in this embodiment of this application, the speaker may pre-prompt the user to enter voiceprint information. For example, the speaker may prompt the user to repeat a segment of random digits "0123456789", or prompt the user to repeat a segment of random letters "ABCDEF, ..., and N", or the like. After receiving a wakeup keyword (for example, "Hey Celia") and the voice instruction sent by the user, the speaker may continue to prompt the user to repeat a group of random digits or random letters, to verify the voiceprint of the user, and avoid simulating the voiceprint of the user in a recording-playing manner.

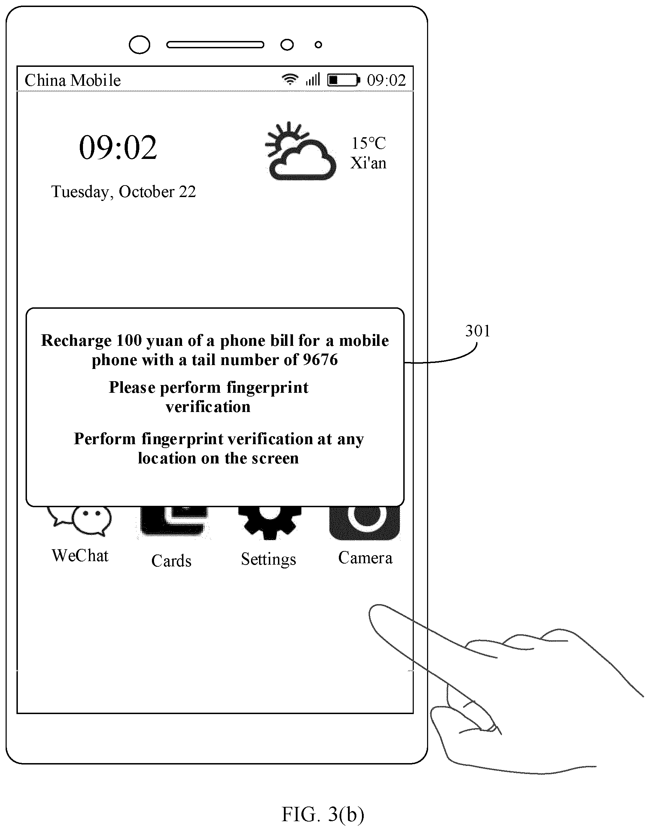

In a GUI shown in FIG. 3(b), after the speaker receives "0324" that is repeated by the user, the speaker may indicate the mobile phone to perform secondary verification. After receiving an indication from the speaker, the mobile phone may automatically pop up a notification box 301. The notification box 301 may display "Recharge 100 yuan of a phone bill for a mobile phone with a tail number of 9676, and please perform fingerprint verification", and prompt the user with "Perform fingerprint verification at any location on the screen". After the mobile phone detects an operation that the user presses or touches any location on a screen of the mobile phone by using a finger, the mobile phone may collect a fingerprint of the user, and verify the fingerprint of the user. After verification performed by the mobile phone on the fingerprint of the user succeeds, the mobile phone may indicate, to the speaker, that secondary authentication succeeds.

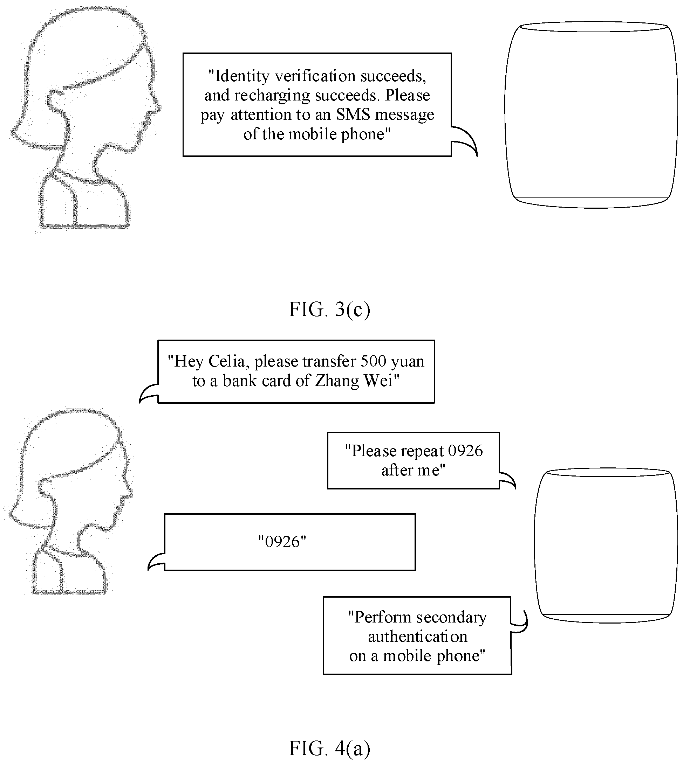

As shown in FIG. 3(c), after the speaker receives an indication indicating that secondary authentication performed by the mobile phone succeeds, the speaker may complete, with a payment platform, a payment behavior of mobile recharge. After payment is completed, the speaker may prompt the user with "Identity authentication succeeds, and recharging succeeds. Please pay attention to an SMS message of the mobile phone".

It should be understood that, in this embodiment of this application, the mobile phone and the speaker may satisfy a same distributed service. For example, after the user logs in to a same account on the speaker and the mobile phone, the speaker and the mobile phone may separately upload, to a cloud server, the account that the user logs in to and identification information of a device, and the cloud server may associate a plurality of devices with a same account. In an embodiment, the mobile phone and the speaker may be located in a same distributed operating system. For example, an operating system of the mobile phone may be a Harmony operating system, and an operating system of the speaker may be a Harmony operating system. The user may log in to a same account on the mobile phone and the speaker, to associate the mobile phone and the speaker on the cloud server. In this case, it can be understood that the mobile phone and the speaker are located in a same distributed operating system.

For example, an operating system of the mobile phone may be an Android operating system, and an operating system of the speaker may be a Harmony operating system. The user may log in to a same account on the mobile phone and the speaker, to associate the mobile phone and the speaker on the cloud server. In this case, it can be understood that the mobile phone and the speaker satisfy a same distributed service.

In this embodiment of this application, multi-device linkage is performed to perform multi-authentication and verification, to help improve voice payment security. The speaker may request the user to repeat a group of random digits, to prevent, to some extent, a criminal from simulating the voiceprint of the user in a recording-playing manner. In addition, the mobile phone, a device with a higher degree of privacy and a higher biometric recognition security level, is used, and multi-device linkage is performed on the mobile phone and the speaker to perform multi-authentication and verification, to meet a high security requirement of voice payment.

FIG. 4(a) to FIG. 4(d) show a group of GUIs according to an embodiment of this application.

As shown in FIG. 4(a), a user sends a voice instruction "Hey Celia, please transfer 500 yuan to a bank card of Zhang Wei" to a speaker. After receiving the voice instruction from the user, the speaker may return "Please repeat 0926 after me" to the user. After receiving a repeating request from the speaker, the user may repeat "0926". After receiving "0926" read by the user, the speaker may verify a voiceprint of the user. After verification succeeds, the speaker may prompt the user with "Perform secondary authentication on a mobile phone".

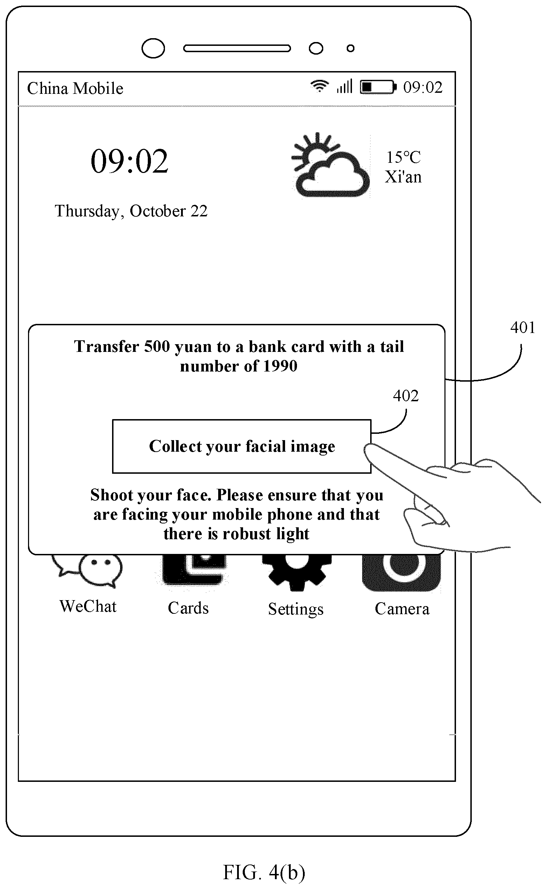

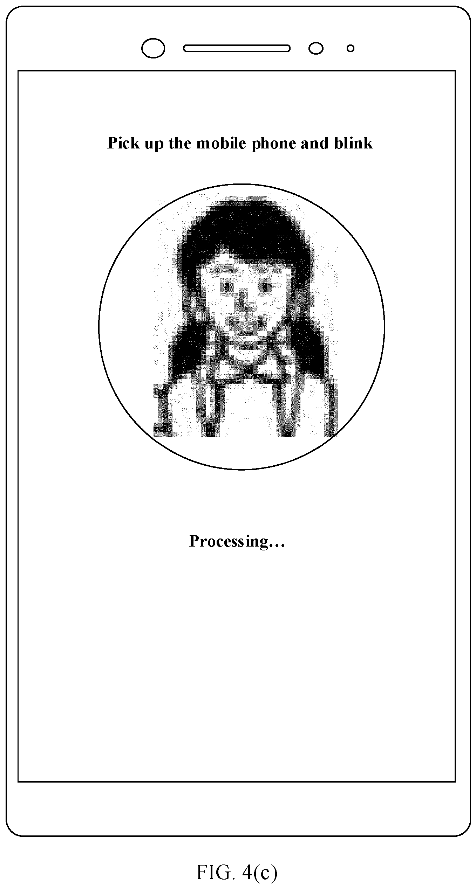

In a GUI shown in FIG. 4(b), after the speaker receives "0926" that is repeated by the user, the speaker may indicate the mobile phone to perform secondary verification. After receiving an indication from the speaker, the mobile phone may automatically pop up a notification box 401. The notification box 401 may display "Transfer 500 yuan to a bank card with a tail number of 1990", and prompt the user with "Shoot your face. Please ensure that you are facing your mobile phone and that there is sufficient light". After detecting an operation that the user taps a control 402, the mobile phone may display a GUI shown in FIG. 4(c).

The GUI shown in FIG. 4(c) is a user face collection interface. The mobile phone may prompt the user with "Pick up the mobile phone and blink". The user may align a face with a camera, and the mobile phone may collect face information of the user and recognize the face of the user. If the mobile phone determines that facial recognition succeeds, the mobile phone may indicate, to the speaker, that secondary authentication succeeds.

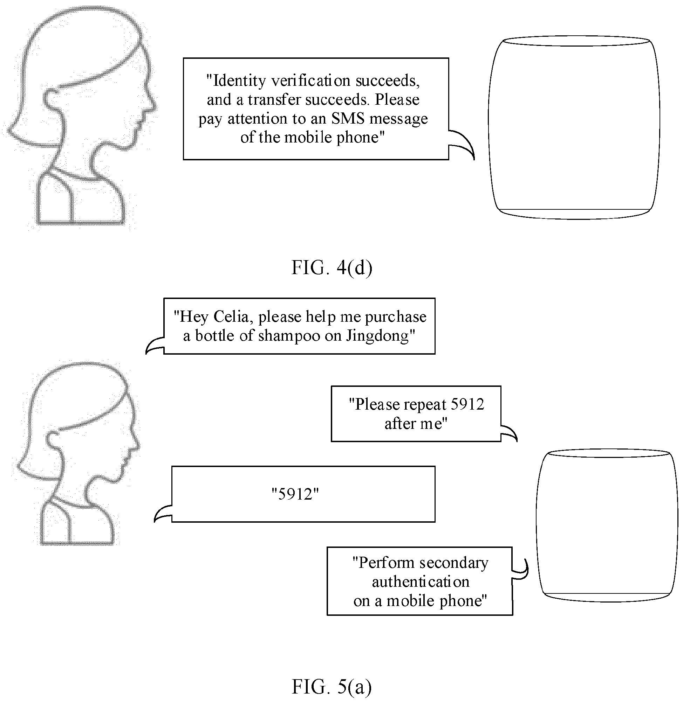

As shown in FIG. 4(d), after the speaker receives an indication indicating that secondary authentication performed by the mobile phone succeeds, the speaker may complete, with a payment platform, a payment behavior of transferring 500 yuan to the user Zhang Wei. After a transfer to the user Zhang Wei succeeds, the speaker may prompt, by using a voice, the user with "Identity authentication succeeds, and a transfer succeeds. Please pay attention to an SMS message of the mobile phone".

In this embodiment of this application, multi-device linkage is performed to perform multi-authentication and verification. When payment is performed by using the speaker, facial recognition performed by the mobile phone and voiceprint verification performed by the speaker may be combined, to help improve voice payment security.

FIG. 5(a) to FIG. 5(c) show another group of GUIs according to an embodiment of this application.

As shown in FIG. 5(a), a user sends a voice instruction "Hey Celia, please help me purchase a bottle of shampoo on Jingdong" to a speaker. After receiving the voice instruction from the user, the speaker may return "Please repeat 5912 after me" to the user. After receiving a repeating request from the speaker, the user may repeat "5912". After receiving "5912" read by the user, the speaker may verify a voiceprint of the user. After verification succeeds, the speaker may prompt the user with "Perform secondary authentication on a mobile phone".

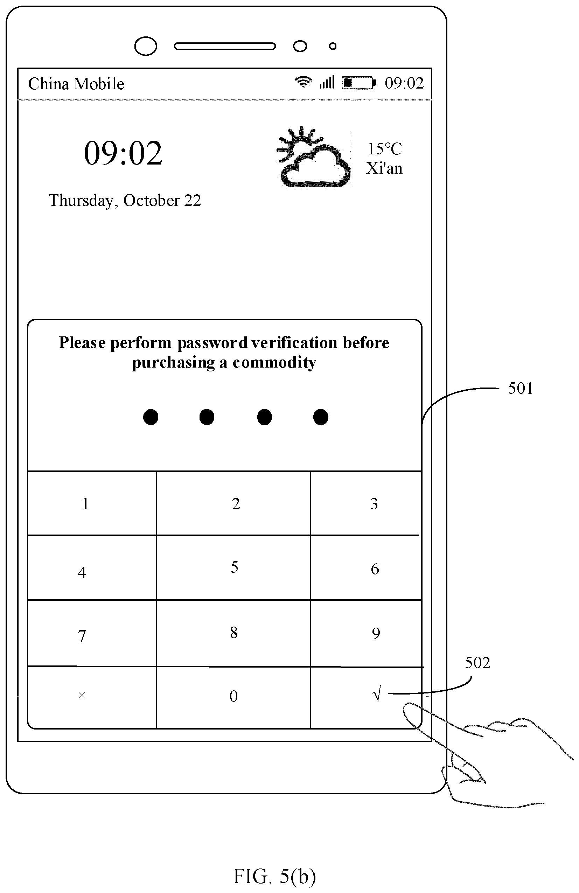

In a GUI shown in FIG. 5(b), after the speaker receives "5912" that is repeated by the user, the speaker may indicate the mobile phone to perform secondary verification. After receiving an indication from the speaker, the mobile phone may automatically pop up a notification box 501. The notification box 501 may display "Please perform password verification before purchasing a commodity". After the mobile phone detects an operation that the user enters a password and taps a control 502, the mobile phone may verify the password entered by the user. After verification performed by the mobile phone on the password entered by the user succeeds, the mobile phone may indicate, to the speaker, that secondary authentication succeeds.

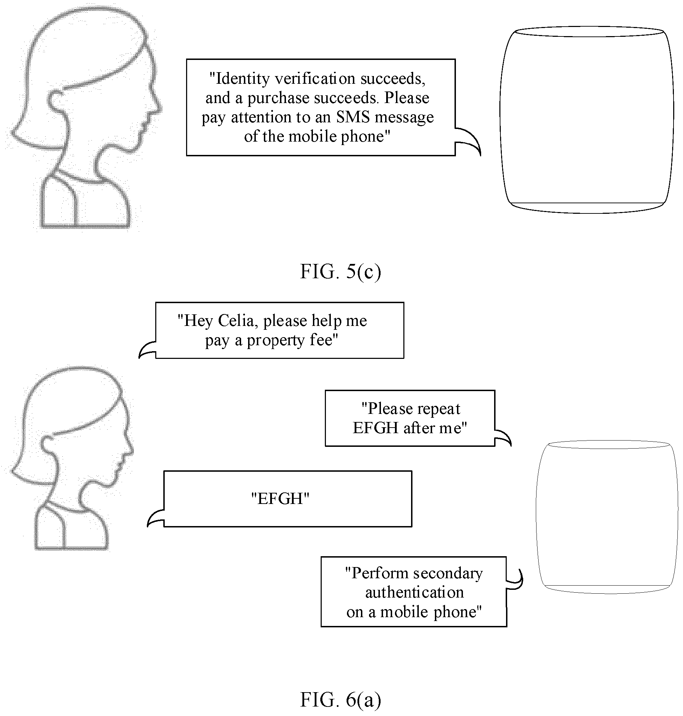

As shown in FIG. 5(c), after the speaker receives an indication indicating that secondary authentication performed by the mobile phone succeeds, the speaker may complete, with a payment platform, a payment behavior of purchasing the shampoo. After payment succeeds, the speaker may prompt, by using a voice, the user with "Identity authentication succeeds, and a purchase succeeds. Please pay attention to an SMS message of the mobile phone".

In this embodiment of this application, multi-device linkage is performed to perform multi-authentication and verification. When payment is performed by using the speaker, password authentication performed by the mobile phone and voiceprint verification performed by the speaker may be combined, to help improve voice payment security.

FIG. 6(a) to FIG. 6(d) show another group of GUIs according to an embodiment of this application.

As shown in FIG. 6(a), a user sends a voice instruction "Hey Celia, please help me pay a property fee" to a speaker. After receiving the voice instruction from the user, the speaker may return "Please repeat EFGH after me" to the user. After receiving a repeating request from the speaker, the user may repeat "EFGH". After receiving "EFGH" read by the user, the speaker may verify a voiceprint of the user. After verification succeeds, the speaker may prompt the user with "Perform secondary authentication on a mobile phone".

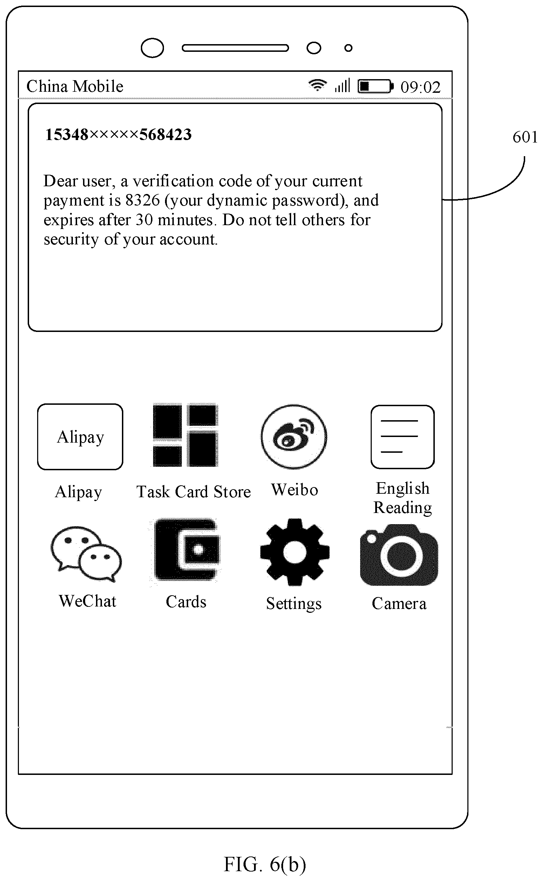

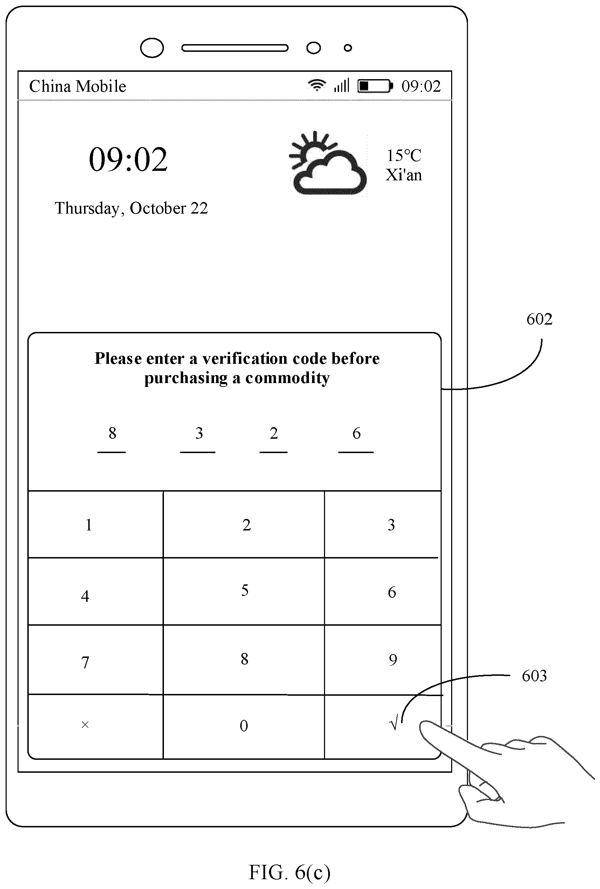

In a GUI shown in FIG. 6(b), after the speaker receives "EFGH" that is repeated by the user, the speaker may indicate the mobile phone to perform secondary verification. After receiving an indication from the speaker, the mobile phone may send a request to a cloud server, to request the cloud server to provide a verification code for current payment. The cloud server may send the verification code to the mobile phone. After receiving a verification code from an operator, the mobile phone may automatically pop up a notification box 601. The notification box 601 may display "Dear user, a verification code of your current payment is 8326 (your dynamic password), and expires after 30 minutes. Do not tell others for security of your account". After receiving the verification code, the mobile phone may automatically display a GUI shown in FIG. 6(c).

Referring to the GUI shown in FIG. 6(c), a notification box 602 for entering a verification code may be automatically displayed on a home screen of the mobile phone. After the mobile phone detects an operation that the user enters a verification code and taps a control 603, the mobile phone may verify the verification code entered by the user. After verification performed by the mobile phone on the verification code entered by the user succeeds, the mobile phone may indicate, to the speaker, that secondary authentication succeeds.

It should be understood that a process in which the mobile phone verifies the verification code entered by the user may be as follows: After detecting the verification code entered by the user, the mobile phone sends the verification code to the cloud server; the cloud server may determine whether the verification code sent by the mobile phone is the same as a verification code sent by a remote server to the mobile phone; if the verification code sent by the mobile phone is the same as the verification code sent by the remote server to the mobile phone, the cloud server may indicate, to the mobile phone, information indicating that verification performed on the verification code succeeds; and after receiving the information, the mobile phone may determine that secondary authentication succeeds.

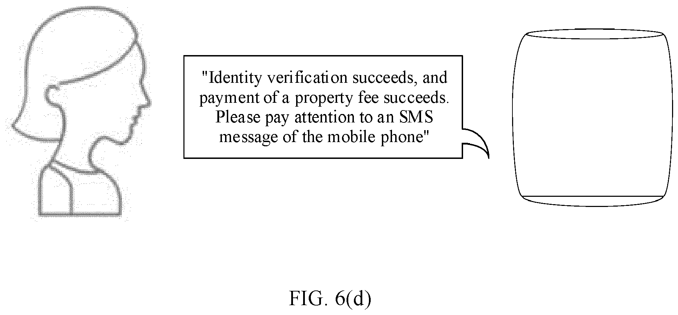

Referring to FIG. 6(d), after receiving an indication indicating that secondary authentication performed by the mobile phone succeeds, the speaker may complete payment of the property fee with a payment platform. After payment succeeds, the speaker may prompt, by using a voice, the user with "Identity authentication succeeds, and payment of a property fee succeeds. Please pay attention to an SMS message of the mobile phone".

In this embodiment of this application, multi-device linkage is performed to perform multi-authentication and verification. When payment is performed by using the speaker, verification code authentication and voiceprint verification performed by the speaker may be combined, to help improve voice payment security.

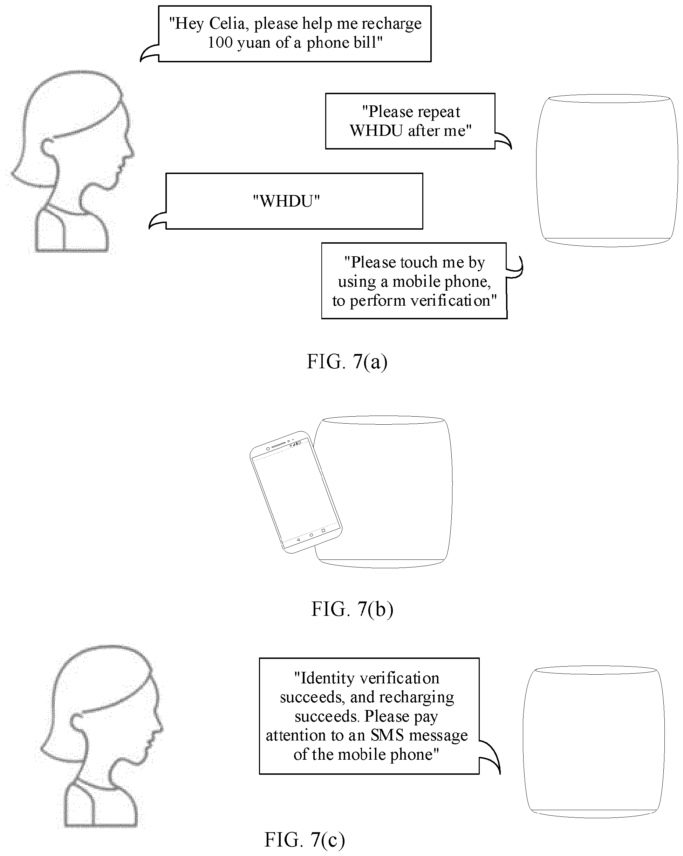

FIG. 7(a) to FIG. 7(c) show another group of GUIs according to an embodiment of this application.

As shown in FIG. 7(a), a user sends a voice instruction "Hey Celia, please help me recharge 100 yuan of a phone bill" to a speaker. After receiving the voice instruction from the user, the speaker may return "Please repeat WHDU after me" to the user.

After receiving a repeating request from the speaker, the user may repeat "WHDU". After receiving "WHDU" read by the user, the speaker may verify a voiceprint of the user. After verification succeeds, the speaker may prompt the user with "Please touch me by using a mobile phone, to perform verification".

As shown in FIG. 7(b), the user may move, close to the speaker, a mobile phone whose near field communication controller interface (NFC controller interface, NCI) function is enabled. After detecting, by using an NFC function, that the mobile phone is moved close to the speaker, the mobile phone may indicate, to the speaker, that secondary authentication succeeds.

It should be understood that based on a protocol specification for instructions and data of communication between an NFC near field communication controller (NFC controller, NFCC) and a device host (device host, DH), in this embodiment of this application, the mobile phone may be used as a card reader device, and the speaker may be used as an authentication device. After the mobile phone is moved close to the speaker, the mobile phone may send identification information of the mobile phone to the speaker through NFC near field communication. The speaker may verify the identifier information of the mobile phone, and if verification succeeds, the speaker may indicate, to the mobile phone, that verification succeeds. After receiving an indication from the speaker, the mobile phone may determine that secondary verification performed on the user succeeds.

As shown in FIG. 7(c), after the speaker receives an indication indicating that secondary authentication performed by the mobile phone succeeds, the speaker may complete recharging of a phone bill of the user with a payment platform. After payment succeeds, the speaker may prompt, by using a voice, the user with "Identity authentication succeeds, and recharging succeeds. Please pay attention to an SMS message of the mobile phone".

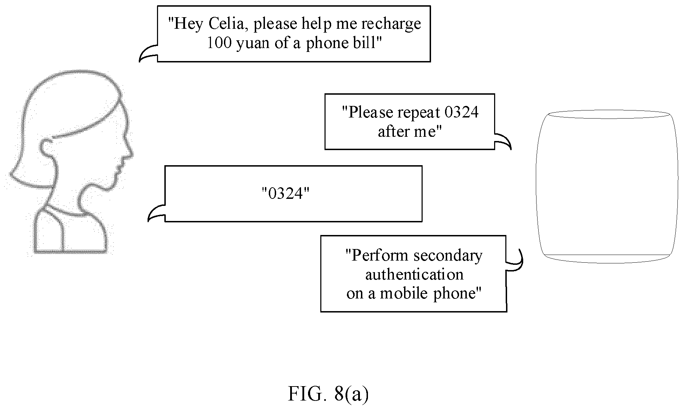

FIG. 8(a) to FIG. 8(c) show another group of GUIs according to an embodiment of this application.

As shown in FIG. 8(a), a user sends a voice instruction "Hey Celia, please help me recharge 100 yuan of a phone bill" to a speaker. After receiving the voice instruction from the user, the speaker may return "Please repeat 0324 after me" to the user.

After receiving a repeating request from the speaker, the user may repeat "0324". After receiving "0324" read by the user, the speaker may verify a voiceprint of the user. After verification succeeds, the speaker may prompt the user with "Perform secondary authentication on a mobile phone".

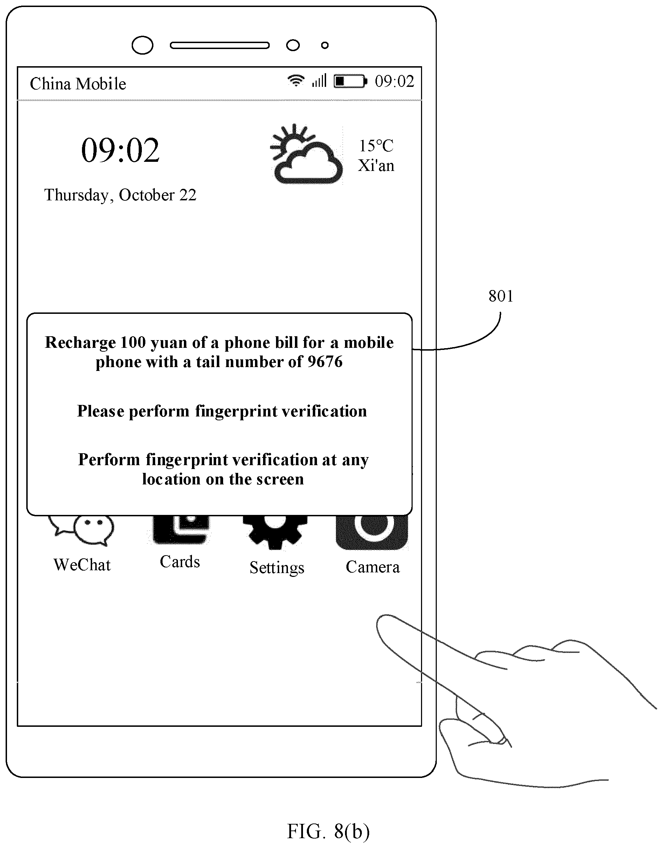

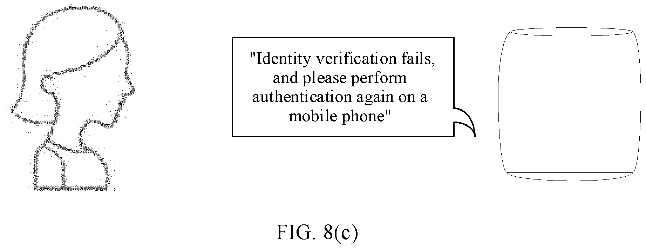

In a GUI shown in FIG. 8(b), after the speaker receives "0324" that is repeated by the user, the speaker may indicate the mobile phone to perform secondary verification. After receiving an indication from the speaker, the mobile phone may automatically pop up a notification box 801. The notification box 301 may display "Recharge 100 yuan of a phone bill for a mobile phone with a tail number of 9676, and please perform fingerprint verification", and prompt the user with "Perform fingerprint verification at any location on the screen". After the mobile phone detects an operation that the user presses or touches any location on a screen of the mobile phone by using a finger, the mobile phone may collect a fingerprint of the user, and verify the fingerprint of the user. After verification performed by the mobile phone on the fingerprint of the user fails, the mobile phone may indicate, to the speaker, that secondary authentication fails. As shown in FIG. 8(c), after the speaker receives an indication indicating that secondary authentication performed by the mobile phone succeeds, the speaker may prompt the user with "Identity authentication fails, and please perform authentication again on a mobile phone".

It should be understood that, in this embodiment of this application, identity authentication performed by the speaker on the user may include authentication performed on the voiceprint of the user and identity authentication performed by another electronic device on the user. After identity authentication performed by the two devices on the user succeeds, the speaker may indicate, to the user, that identity authentication performed on the user succeeds.

If authentication performed by the speaker on the voiceprint of the user fails, the speaker may directly remind the user of "Voiceprint authentication fails, and please perform authentication again" in FIG. 8(a), and further, the speaker may continue to send a repeating instruction to the user (which may be a random digit and/or letter that is the same as a previous random digit and/or letter, a new random digit and/or letter, or the like).

After authentication performed by the speaker on the voiceprint of the user succeeds, but when the user performs secondary authentication on the mobile phone, verification performed by the mobile phone on information such as a fingerprint, a face, a password, or a verification code of the user fails, or the mobile phone does not detect that the mobile phone is moved close to the speaker, the mobile phone may indicate, to the speaker, that secondary authentication fails, so that the speaker may remind the user to perform secondary authentication on the mobile phone again, or the speaker may prompt the user to start next voiceprint authentication and identity authentication performed by the mobile phone on the user.

In an embodiment, if authentication performed by the mobile phone on the user succeeds (for example, fingerprint authentication succeeds and facial authentication succeeds), but the mobile phone determines that a current payment amount of the user exceeds a payment amount limit set by the user on the mobile phone, even if authentication performed by the mobile phone on the user succeeds, the mobile phone prompts the speaker not to make payment. For example, after authentication performed by the mobile phone on the user succeeds, the mobile phone may indicate, to the user, that secondary authentication succeeds but a payment amount exceeds a maximum limit. After receiving an indication, the speaker may prompt the user with "Identity authentication succeeds, but a payment amount exceeds a limit of 50 yuan. Please adjust the payment amount". Then, the user may send a voice instruction "Hey Celia, please help me recharge 50 yuan of a phone bill" to the speaker again. After receiving the voice instruction again, the speaker may first verify the voiceprint of the user. After verification succeeds, the speaker may directly complete recharging of a phone bill of the user with a payment platform.

Alternatively, the speaker may verify the voiceprint of the user again, and after verification performed on the voiceprint of the user succeeds, the speaker may indicate the mobile phone to perform secondary authentication on the user. After secondary authentication performed by the mobile phone on the user succeeds, the speaker completes recharging of a phone bill the user with the payment platform.

The foregoing describes a manner in which multi-device linkage is performed to perform multi-authentication and verification in embodiments of this application by using FIG. 3(a) to FIG. 8(c). The following describes a process in which speaker-based voice payment is set at a mobile phone end.

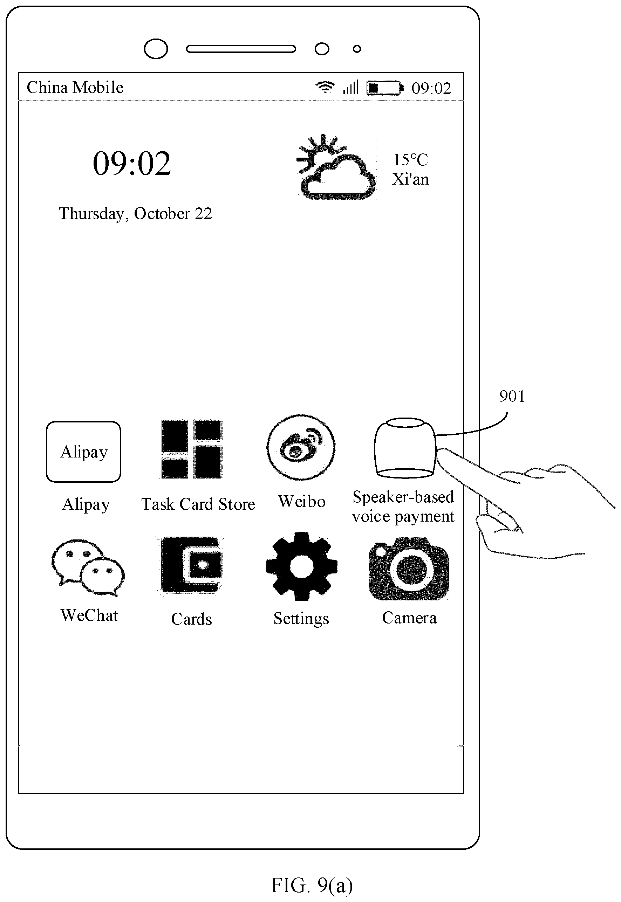

FIG. 9(a) to FIG. 9(d) show another group of GUIs according to an embodiment of this application.

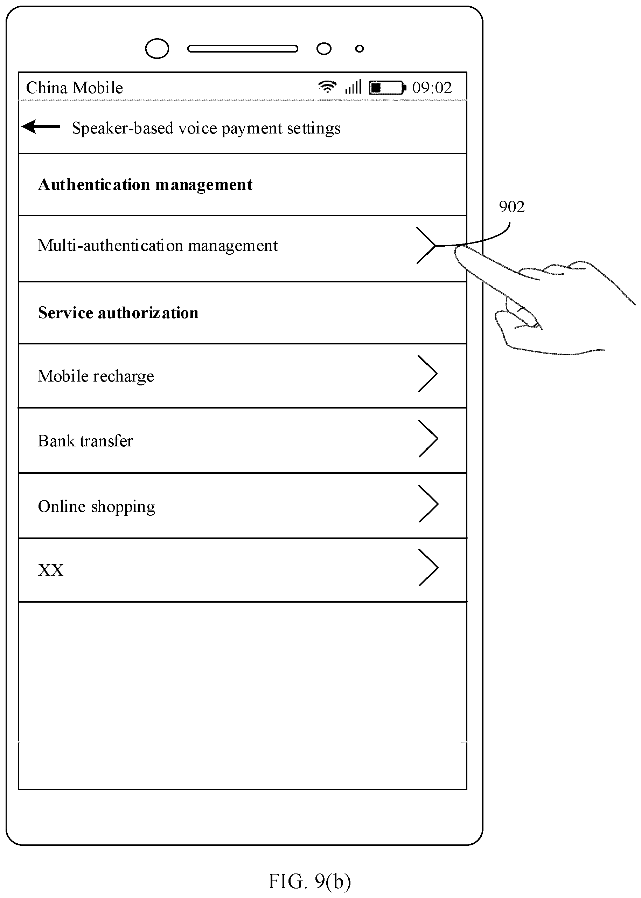

A GUI shown in FIG. 9(a) is a home screen of a mobile phone. The GUI includes a plurality of application icons, and the plurality of application icons include an icon 901 of Speaker-based voice payment. After detecting an operation that a user taps the icon 901 on the home screen, the mobile phone may start setting a function related to Speaker-based voice payment, and display a GUI shown in FIG. 9(b).

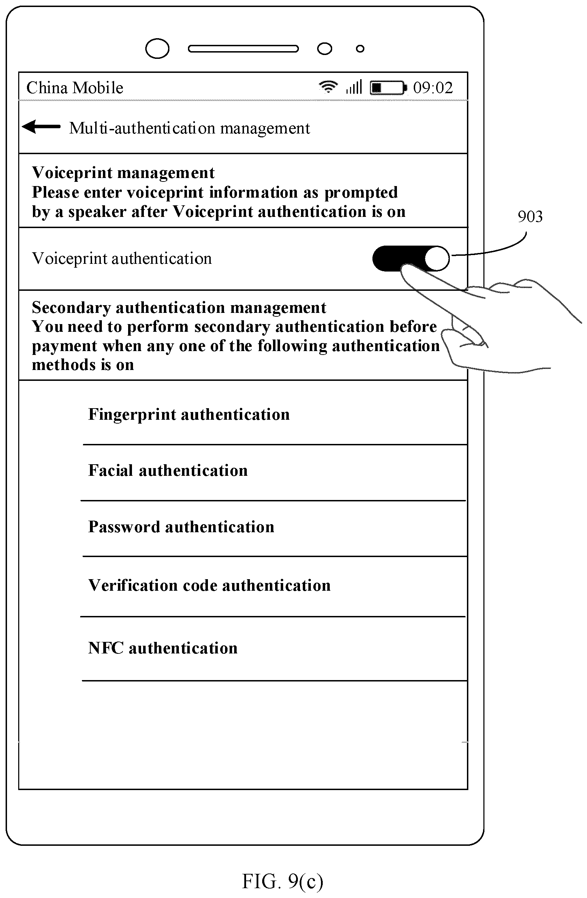

The GUI shown in FIG. 9(b) is a setting interface of Speaker-based voice payment. The GUI includes a plurality of function options, and the plurality of function options include authentication management, service authorization, and the like. The authentication management includes multi-authentication management, and service authorization includes mobile recharge, a bank transfer, online shopping, and the like. After detecting an operation that the user taps a function 902 of Multi-authentication management, the mobile phone displays a GUI shown in FIG. 9(c).

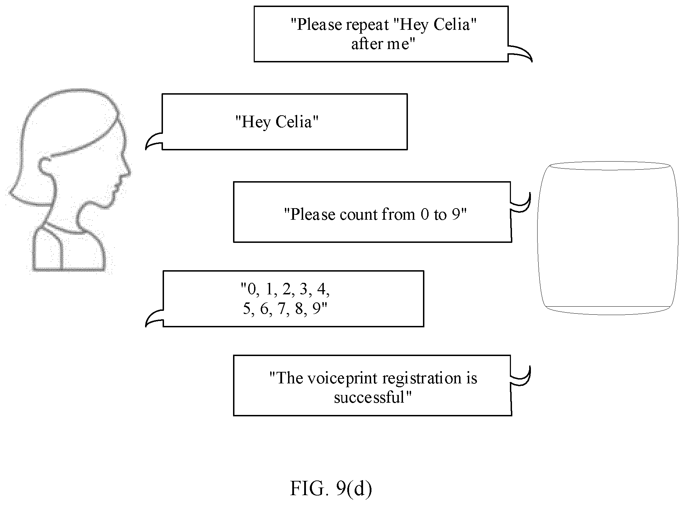

The GUI shown in FIG. 9(c) is a function setting interface of Multi-authentication management. The GUI includes a plurality of function options for user authentication, and the plurality of function options includes Voiceprint management. After the mobile phone detects an operation that the user taps a function 903 of Voiceprint authentication, the mobile phone may prompt the speaker to enter voiceprint information of the user. For a process in which the user enters the voiceprint information, refer to FIG. 9(d).

Referring to FIG. 9(d), after the speaker receives information indicating that the mobile phone prompts the speaker to enter a voiceprint of the user, the speaker may prompt the user with "Please repeat "Hey Celia" after me". After hearing a repeating instruction from the speaker, the user may repeat "Hey Celia". The speaker may perform an analysis based on "Hey Celia" sounded by the user, and store the voiceprint information of the user. The speaker may continue to prompt the user with "Please count from 0 to 9". After hearing the repeating instruction from the speaker, the user may repeat "0123456789". The speaker may perform an analysis based on "0123456789" sounded by the user, and store the voiceprint information of the user again.

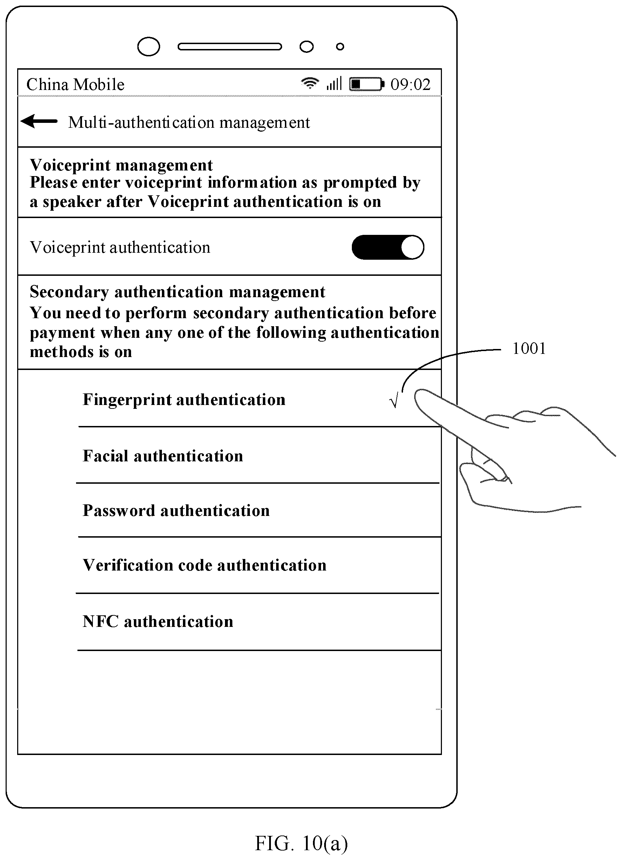

It should be understood that, in this embodiment of this application, a same distributed operating system may include a mobile phone and a plurality of smart speakers (for example, a speaker 1 and a speaker 2). In the setting interface of Speaker-based voice payment, the user may first select a speaker that needs to be authorized for voice payment. For example, after the mobile phone detects that the user authorizes the speaker 1 to perform voice payment, the user can perform voice payment only by using the speaker 1, but cannot perform voice payment by using the speaker 2. The foregoing describes, with reference to FIG. 10(a) to FIG. 10(c), a process in which the user and the speaker enter the voiceprint information. The following describes a process in which the user performs secondary authentication management on the mobile phone.

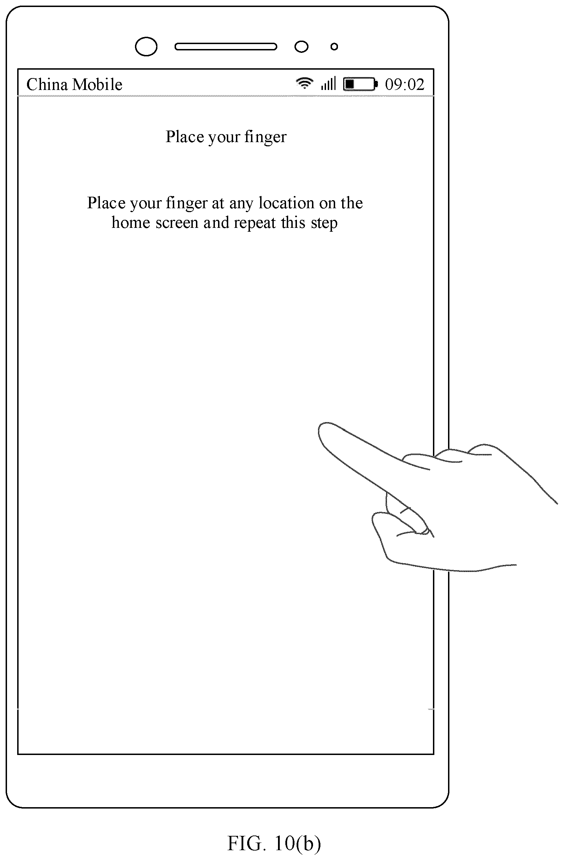

A GUI shown in FIG. 10(a) is a function setting interface of Multi-authentication management. After a mobile phone detects an operation that a user taps a function 1001 of Fingerprint authentication, the mobile phone may prompt the user to enter fingerprint information, and display a GUI shown in FIG. 10(b).

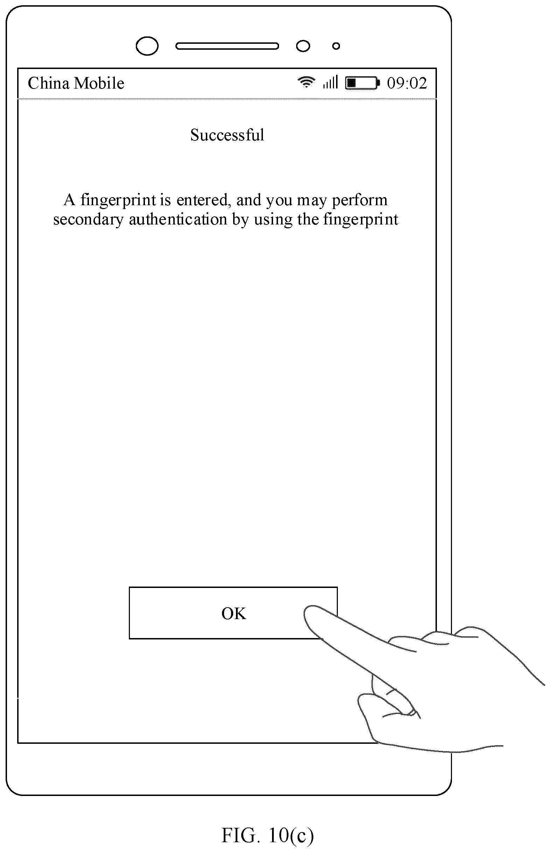

The GUI shown in FIG. 10(b) is a user fingerprint entry interface. The mobile phone may prompt the user with "Place your finger at any location on the home screen and repeat this step" in this interface. After detecting an operation that the user presses or touches a display by using the mobile phone of the user, the mobile phone may perform an operation of entering a fingerprint of the user. After the mobile phone completes entry of the fingerprint of the user, the mobile phone may display a GUI shown in FIG. 10(c).

Refer to the GUI shown in FIG. 10(c). After the mobile phone completes entry of the fingerprint of the user, the mobile phone may prompt the user with "A fingerprint is entered, and you may perform secondary authentication by using the fingerprint" on the display.

It should be understood that, in this embodiment of this application, if the user previously enters the fingerprint in the mobile phone, for example, when the user unlocks the mobile phone, the mobile phone may be unlocked by using the fingerprint, and the fingerprint information needs to be entered in advance. In this case, the fingerprint information used when the user unlocks the mobile phone by using the fingerprint may also be used as fingerprint information used for secondary authentication. Alternatively, after the user selects fingerprint authentication in secondary authentication management, although the mobile phone previously stores the fingerprint of the user, the user may enter a fingerprint again.

It should be further understood that in the foregoing fingerprint entry process, a fingerprint of a single finger (for example, a thumb or an index finger) or fingerprints of a plurality of fingers (for example, an index finger and a middle finger) may be used. In this case, when the user performs fingerprint authentication on the mobile phone, the user needs to press a screen by simultaneously using the plurality of fingers, and the mobile phone may authenticate the fingerprints of the plurality of fingers.

It should be further understood that the foregoing merely describes a case in which the user selects fingerprint authentication as an authentication manner of secondary authentication, and the user may alternatively select an authentication manner such as facial authentication, password authentication, verification code authentication, or NFC authentication.

The foregoing describes, with reference to FIG. 9(a) and FIG. 10(c), a process in which the user sets voiceprint authentication and secondary authentication on the mobile phone. The following describes a process in which the user sets a payment limit of the user on the mobile phone.

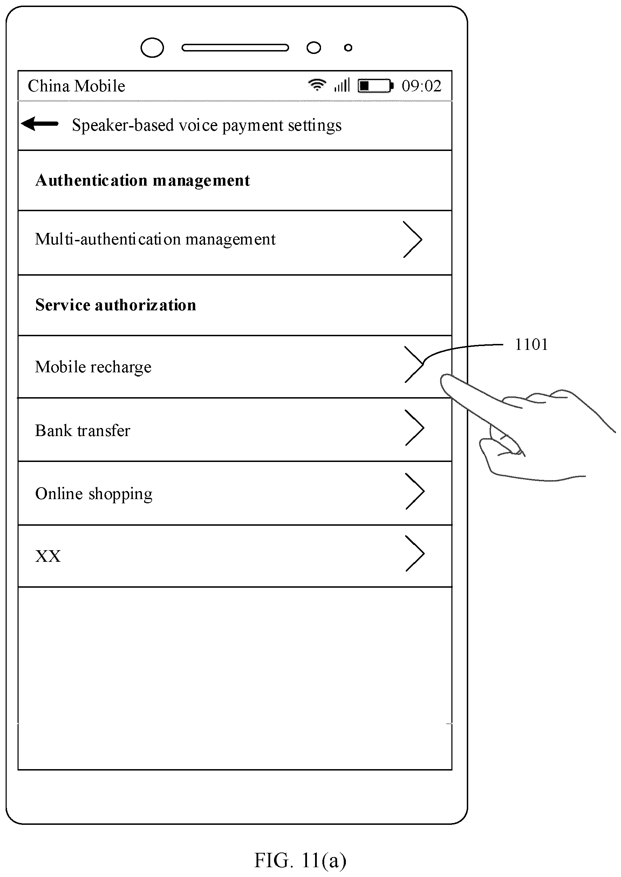

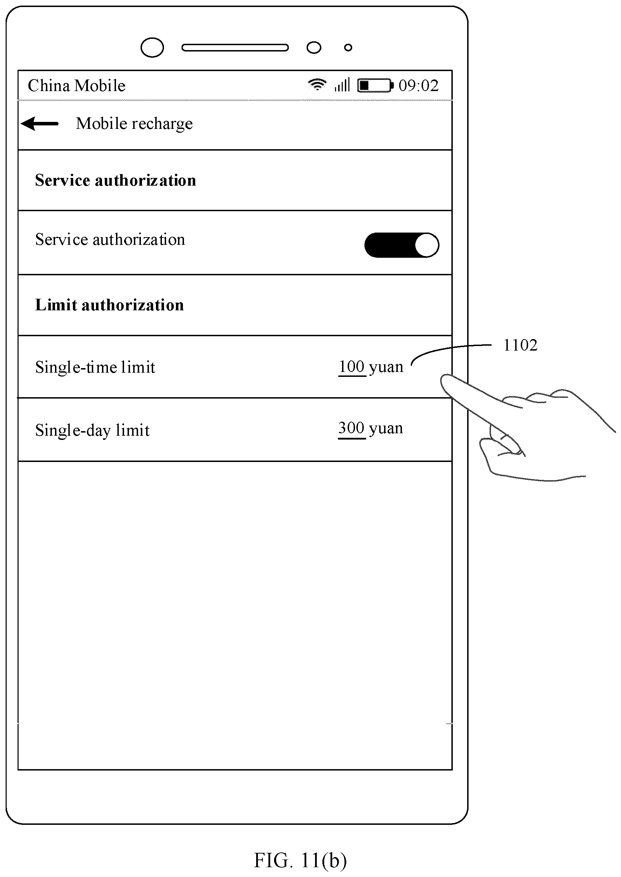

A GUI shown in FIG. 11(a) is a setting interface of Speaker-based voice payment. Service authorization includes mobile recharge, a bank transfer, online shopping, or the like. A user may set limits on a plurality of services. For example, after detecting an operation that the user taps a function 1101 of Mobile recharge, the mobile phone displays a GUI shown in FIG. 11(b).

The GUI shown in FIG. 11(b) is a setting interface of Mobile recharge. The user may grant limit authorization to Mobile recharge. The limit authorization includes a single-time limit and a single-day limit. As shown in FIG. 11(b), after detecting an operation that the user enters 100 yuan in the single-time limit and enters 300 yuan in the single-day limit, the mobile phone may set a corresponding limit. Then, after the mobile phone receives secondary authentication information sent by the speaker, the secondary authentication information may carry recharging amount information in a voice command of the user. If the amount is greater than the single-time limit, the mobile phone may indicate, to the speaker, that a recharging amount of the user is greater than the single-time limit or the single-day limit. Therefore, the speaker may prompt the user to adjust a payment amount.

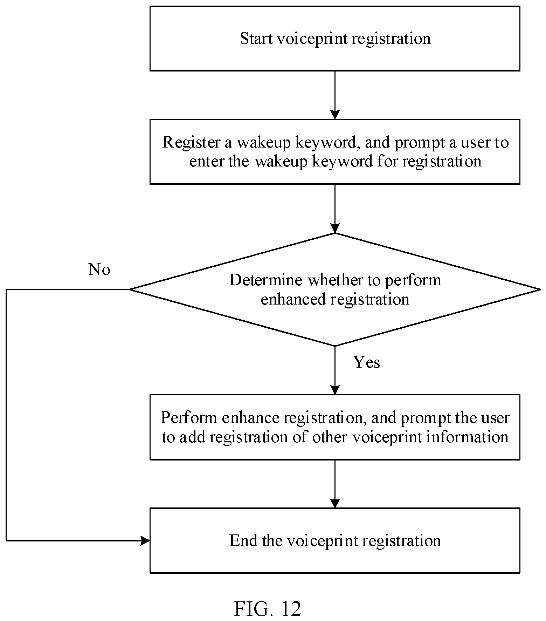

FIG. 12 is a schematic flowchart of a voiceprint registration method according to an embodiment of this application. As shown in FIG. 12, the method may be performed by a speaker. After receiving an indication indicating that a mobile phone indicates to enter a voiceprint of a user, the speaker may start to register the voiceprint of the user. The speaker may first register a wakeup keyword, and prompt the user to enter the wakeup keyword for registration. For example, as shown in FIG. 9(d), the speaker prompts the user with "Please repeat "Hey Celia" after me". After receiving voice information "Hey Celia" from the user, the speaker completes registration of the wakeup keyword.

Subsequently, the user may further perform enhanced registration. For example, a voiceprint authentication function on the mobile phone may include wakeup keyword voiceprint authentication and enhanced voiceprint authentication. After detecting that the user selects wakeup keyword voiceprint authentication and enhanced voiceprint authentication, the mobile phone may indicate, by using a cloud server, the speaker to perform wakeup keyword registration and enhanced registration. If the speaker determines that enhanced registration needs to be performed, the speaker starts an enhanced registration process, and prompts the user to add registration of other voiceprint information. For example, as shown in FIG. 9(d), the speaker prompts the user with "Please count from 0 to 9". After receiving voice message "0123456789" from the user, the speaker may complete enhanced registration of the voiceprint. If the speaker determines that enhanced registration does not need to be performed, a voiceprint registration process ends.

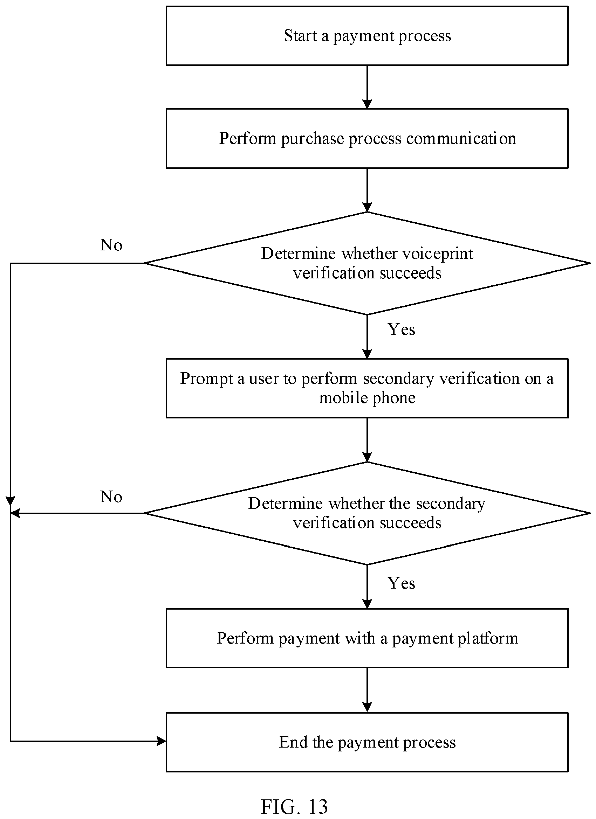

FIG. 13 is a schematic flowchart of performing voice payment by using a speaker according to an embodiment of this application. As shown in FIG. 13, the speaker first receives a voice payment instruction from a user. For example, as shown in FIG. 3(a), the speaker receives a voice payment instruction "Hey Celia, please help me recharge 100 yuan of a phone bill" from the user. After voiceprint verification performed by the speaker on a wakeup keyword in the voice payment instruction succeeds, the speaker may continue to perform secondary voiceprint verification. For example, as shown in FIG. 3(a), the speaker continues to prompt the user with "Please repeat 0324 after me". After receiving "0324" that is repeated by the user, the speaker may perform second voiceprint verification on a voiceprint of the user. After each time of voiceprint verification succeeds, the speaker may indicate a mobile phone to perform secondary authentication.

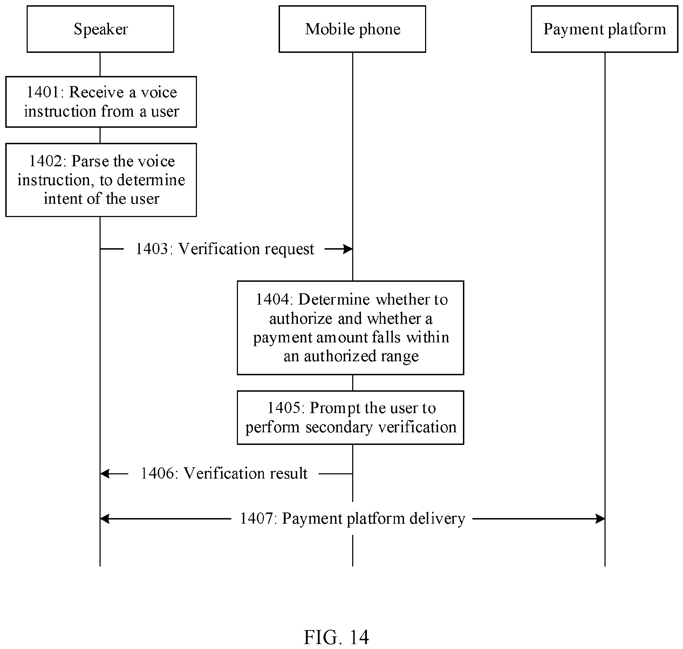

After receiving an indication indicating that the speaker indicates to perform secondary authentication, the mobile phone may prompt the user to perform secondary authentication on the mobile phone. Secondary verification may include fingerprint authentication, facial recognition, password authentication, verification code authentication, and touch verification. After second authentication performed by the mobile phone on the user succeeds, the mobile phone may indicate the speaker to perform payment. The speaker may perform a payment operation with a payment platform. FIG. 14 is a schematic flowchart of a method 1400 for performing voice payment by using a speaker according to an embodiment of this application. As shown in FIG. 14, the method 1400 includes the following steps.

S1401: A speaker receives a voice instruction from a user.

For example, as shown in FIG. 3(a), the user sends a voice instruction "Hey Celia, please help me recharge 100 yuan of a phone bill".

S1402: The speaker parses the voice instruction from the user, to determine intent of the user.

In an embodiment, the speaker may include a speech recognition (automatic speech recognition, ASR) module and a semantic understanding (natural language understanding, NLU) module.

The ASR module is mainly configured to recognize a speech of a user as text content, and the NLU module is mainly configured to understand intent (intent) of the user, and perform slot (slot) parsing.

For example, the ASR module converts a voice into a text, to obtain information: Hey Celia, please help me recharge 100 yuan of a phone bill.

From this sentence, the NLU module can parse the content shown in Table 1.

**Table 1**

| Intent (intent) | "Recharge a phone bill" |
|---|---|
| Slot (slot) | Recharging amount = "100 yuan" |
| | Recharged mobile phone number = "187 × × 9676" |

S1403: The speaker sends a verification request to a mobile phone.

For example, the verification request includes identification information of a device, a payment sequence number identifier, information about a commodity, and a payment amount.

The identification information of the device is used to notify the mobile phone of a unique ID identifier of the speaker. After receiving identification information of the speaker, the mobile phone may determine whether the speaker is authorized to perform a payment operation. It should be understood that a same distributed operating system may include a plurality of speaker devices (for example, a network environment includes a speaker 1 and a speaker 2). The mobile phone may set, in Speaker-based voice payment, a speaker that is authorized by the mobile phone to perform voice payment, for example, the speaker 1. Then, after the speaker 1 receives a voice payment instruction from the user, and verification performed by the speaker 1 on corresponding voiceprint information succeeds, the speaker 1 may use the verification request to carry identification information of the speaker 1, so that the mobile phone determines whether the identification information of the speaker 1 is identification information of the speaker that is authorized by the mobile phone to perform voice payment.

The payment sequence number identifier is an identifier generated by the speaker for current payment, and the identifier may be used to indicate that current recharging is recharging a mobile phone whose mobile phone number is "187×××9676". The payment sequence number identifier is used to distinguish between different payment operations. For example, if the user separately sends voice payment instructions of recharging phone bills of a mobile phone number (for example, "187×××9676") of the user and a mobile phone number (for example, "182×××6834") of another user, payment sequence number IDs are used to distinguish between different payment operations of the user. Alternatively, it can be further understood that the payment sequence number ID is used as a unique identifier used to distinguish one-time payment. In other words, different IDs are used for current payment and next payment. The information about the commodity is used by the mobile phone to verify whether the commodity is authorized. For example, the mobile phone does not have an authorization permission for a bank transfer. If the voice instruction received by the speaker indicates to perform a payment operation of the bank transfer, the mobile phone may reject the payment operation before performing secondary authentication, and indicate, to the speaker, that the mobile phone rejects the payment operation.

The payment amount is used by the mobile phone to determine whether a current payment amount falls within limit authorization of the commodity. For example, the user sets, in Speaker-based voice payment in the mobile phone, a single-time limit of recharging 100 yuan of a phone bill. When a payment amount indicated in a verification request that is sent by the speaker and that is received by the mobile phone is 200 yuan, the mobile phone may reject the payment operation before performing secondary authentication, and indicate, to the speaker, that the mobile phone rejects the payment operation.

It should be understood that, in this embodiment of this application, the speaker and the mobile phone may directly communicate with each other, or the speaker and the mobile phone may indirectly communicate with each other by using a cloud server. When the speaker and the mobile phone directly communicate with each other, the speaker and the mobile phone may transmit information such as the verification request and a verification response by using a near field communication technology such as Bluetooth.

S1404: The mobile phone determines whether the information about the commodity is authorized and whether the payment amount falls within an authorized range.

For example, the voice instruction received by the speaker from the user is "Hey Celia, please transfer 500 yuan to a bank card of Zhang Wei", and the speaker may indicate, to the mobile phone after determining intent and a slot of the voice instruction, that the information about the commodity is a bank transfer and that the payment amount is 500 yuan. After receiving the information about the commodity and information about the payment amount, the mobile phone may determine whether the bank transfer is authorized. If a payment behavior of the bank transfer is authorized, the mobile phone may continue to determine whether the payment amount falls within the authorized range. For example, if an authorized amount range of the bank transfer is less than 1,000 yuan for a single time, the mobile phone may determine that the payment amount falls within the authorized range.

In an embodiment, if the user further sets a single-day limit (for example, 2000 yuan) of the bank transfer, the mobile phone further needs to determine the single-day limit, to determine whether a current transfer amount plus a transfer amount existing before current payment on a same day falls within 2000 yuan.

S1405: If the mobile phone determines that the information about the commodity is authorized and that the payment amount falls within the authorized range, the mobile phone starts to perform secondary authentication.

For example, as shown in FIG. 3(b), the mobile phone may authenticate a fingerprint of the user.

For example, as shown in FIG. 4(c), the mobile phone may recognize a face of the user.

For example, as shown in FIG. 5(b), the mobile phone may authenticate a password entered by the user.

For example, as shown in FIG. 6(c), the mobile phone may authenticate a verification code entered by the user.

For example, as shown in FIG. 7(b), the mobile phone may detect a touch with the speaker.

It should be understood that, in this embodiment of this application, in a process in which the mobile phone touches the speaker to perform secondary authentication on the user, inter-device communication may be performed when the mobile phone is in an NFC touch with the speaker. For example, after the mobile phone is moved close to the speaker, the mobile phone may send an NFC field strength sensing message to the speaker. The NFC field strength sensing message carries identification information of the mobile phone. After the speaker receives the NFC field strength sensing message, the speaker may determine whether the identification information that is of the mobile phone and that is carried in the message is the same as identification information that is of the mobile phone and that is stored in the speaker, and if the identification information that is of the mobile phone and that is carried in the message is the same as the identification information that is of the mobile phone and that is stored in the speaker, the speaker may indicate that verification performed on the mobile phone succeeds; or if the identification information that is of the mobile phone and that is carried in the message is different from the identification information that is of the mobile phone and that is stored in the speaker, the speaker may indicate that verification performed on the mobile phone fails. After the mobile phone receives an indication of the speaker, if the speaker indicates that verification performed on the mobile phone succeeds, the mobile phone may determine that secondary verification performed on the user succeeds.

It should be further understood that, the user may set, by using the mobile phone, a speaker (for example, the speaker 1) that is authorized to perform voice payment. After the mobile phone determines that the user sets the speaker 1 as the speaker that is authorized to perform voice payment, the mobile phone may send the identification information of the mobile phone to the cloud server, the cloud server sends the identification information of the mobile phone to the speaker 1, and the speaker 1 may store the identification information of the mobile phone. Therefore, when there is an NFC touch, the identification information sent by the mobile phone may be verified.

In an embodiment, the mobile phone may further perform secondary authentication in a plurality of authentication manners. For example, the mobile phone may authenticate the user through fingerprint authentication and an NFC physical touch. Alternatively, the mobile phone may authenticate the user through facial recognition and an NFC physical touch.

S1406: The mobile phone sends a verification result to the speaker.

For example, the verification result includes the identification information of the device in the verification request, the payment sequence number identifier, and a verification result of performing secondary verification by the mobile phone. The verification result is used to indicate whether secondary authentication performed by the mobile phone on the user succeeds.

It should be understood that the verification result further needs to carry the payment sequence number identifier, so that the speaker can clearly determine a specific payment operation for which the verification result is obtained, and the speaker can clearly determine whether to complete a transaction with a corresponding payment platform for the payment operation.

It should be further understood that the verification result carries the identification information of the device (the identification information of the speaker), so that the speaker learns of a specific speaker for which the verification result is obtained. For example, if a verification result received by the speaker 1 carries identification information of the speaker 1, and verification succeeds when the mobile phone performs secondary verification, the speaker 1 may complete the payment operation with the corresponding payment platform for a payment sequence number identifier in the verification result.

S1407: If the speaker determines that second authentication performed by the mobile phone on the user succeeds in the verification result, the speaker may complete the transaction with the payment platform.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one location, or may be distributed on a plurality of network units. Some or all of the units may be selected depending on actual requirements to achieve the objectives of the solutions in the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash disk, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device, and the first electronic device and the second electronic device are associated by using a cloud server;
the first electronic device is configured to receive first voice information of a user, wherein the first voice information is used to indicate a payment operation performed by the user;
when a voiceprint feature of the first voice information meets a preset condition, the first electronic device is further configured to send request information to the second electronic device, wherein the request information is used to request the second electronic device to authenticate the user;
the second electronic device is configured to prompt, based on the request information, the user to perform an authentication process, wherein the authentication process comprises one or more of fingerprint authentication, facial recognition, password authentication, verification code authentication, and near field communication NFC authentication;
when authentication performed by the second electronic device on the user succeeds, the second electronic device is further configured to send response information to the first electronic device, wherein the response information is used to indicate that authentication performed by the second electronic device on the user succeeds; and
the first electronic device is further configured to complete the payment operation with a payment platform based on the response information.

2. The system according to claim 1, wherein the request information comprises information about a commodity corresponding to the payment operation, and the second electronic device is further configured to: before sending the response information to the first electronic device, determine that the user authorizes payment for the commodity.

3. The system according to claim 2, wherein the request information comprises a payment amount of the commodity, and the second electronic device is further configured to: before sending the response information to the first electronic device, determine that the payment amount falls within a preset limit.

4. The system according to any one of claims 1 to 3, wherein the authentication process comprises NFC authentication, and the first electronic device stores identification information of the second electronic device;
the first electronic device is further configured to prompt the user to move the second electronic device close to the first electronic device;
the second electronic device is further configured to send a verification message to the first electronic device through NFC, wherein the verification message comprises first identification information; and
when the first identification information is the same as the identification information of the second electronic device, the first electronic device is further configured to send a verification response to the second electronic device, wherein the verification response is used to indicate that authentication performed on an identifier of the second electronic device succeeds.

5. The system according to any one of claims 1 to 4, wherein the first electronic device is further configured to randomly generate verification information before sending the request information to the second electronic device;
the first electronic device is further configured to send second voice information to the user, wherein the second voice information is used to prompt the user to repeat the verification information;
the first electronic device is further configured to receive third voice information sent by the user, wherein the third voice information comprises the verification information; and
the first electronic device is further configured to determine that a voiceprint feature of the third voice information meets the preset condition.

6. The system according to claim 5, wherein the first electronic device is further configured to: before randomly generating the verification information, prompt the user to enter the verification information.

7. The system according to claim 5 or 6, wherein the verification information comprises a digit and/or a letter.

8. The system according to any one of claims 1 to 7, wherein the first electronic device is a smart speaker.

9. A voice payment method, wherein the method is applied to a first electronic device and comprises:
receiving, by the first electronic device, first voice information of a user, wherein the first voice information is used to indicate a payment operation performed by the user;
when a voiceprint feature of the first voice information meets a preset condition, sending, by the first electronic device, request information to a second electronic device, wherein the request information is used to request the second electronic device to authenticate the user;
receiving, by the first electronic device, response information sent by the second electronic device, wherein the response information is used to indicate that authentication performed by the second electronic device on the user succeeds; and
completing, by the first electronic device, the payment operation with a payment platform.

10. The method according to claim 9, wherein the request information comprises information about a commodity corresponding to the payment operation.

11. The method according to claim 10, wherein the request information further comprises a payment amount of the commodity.

12. The method according to any one of claims 9 to 11, wherein the first electronic device stores identification information of the second electronic device, and before the receiving, by the first electronic device, response information sent by the second electronic device, the method further comprises:
prompting the user to move the second electronic device close to the first electronic device;
receiving, through NFC, a verification message sent by the second electronic device, wherein the verification message comprises first identification information; and
when the first identification information is the same as the identification information of the second electronic device, sending a verification response to the second electronic device, wherein the verification response is used to indicate that authentication performed on an identifier of the second electronic device succeeds.

13. The method according to any one of claims 9 to 12, wherein before the sending, by the first electronic device, request information to a second electronic device, the method further comprises:
randomly generating, by the first electronic device, verification information;
sending, by the first electronic device, second voice information to the user, wherein the second voice information is used to prompt the user to repeat the verification information;
receiving, by the first electronic device, third voice information sent by the user, wherein the third voice information comprises the verification information; and
determining, by the first electronic device, that a voiceprint feature of the third voice information meets the preset condition.

14. The method according to claim 13, wherein before the randomly generating, by the first electronic device, verification information, the method further comprises:
prompting, by the first electronic device, the user to enter the verification information.

15. The method according to claim 13 or 14, wherein the verification information comprises a digit and/or a letter.

16. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the following steps:
receiving first voice information of a user, wherein the first voice information is used to indicate a payment operation performed by the user;
when a voiceprint feature of the first voice information meets a preset condition, sending request information to another electronic device, wherein the request information is used to indicate the another electronic device to authenticate the user;
receiving response information sent by the another electronic device, wherein the response information is used to indicate that authentication performed by the second electronic device on the user succeeds; and
completing the payment operation with a payment platform.

17. The electronic device according to claim 16, wherein the request information comprises information about a commodity corresponding to the payment operation.

18. The electronic device according to claim 17, wherein the request information further comprises a payment amount of the commodity.

19. The electronic device according to any one of claims 16 to 18, wherein the electronic device stores identification information of the another electronic device, and when the instructions are executed by the one or more processors, the electronic device is enabled to perform the following steps:
before receiving the response information sent by the another electronic device, receiving, through NFC, a verification message sent by the another electronic device, wherein the verification message comprises first identification information; and
when the first identification information is the same as the identification information of the another electronic device, sending a verification response to the another electronic device, wherein the verification response is used to indicate that authentication performed on an identifier of the another electronic device succeeds.

20. The electronic device according to any one of claims 16 to 19, wherein when the instructions are executed by the one or more processors, the electronic device is enabled to perform the following steps:
before sending the request information to the another electronic device, randomly generating verification information;
sending second voice information to the user, wherein the second voice information is used to prompt the user to repeat the verification information;
receiving third voice information sent by the user, wherein the third voice information comprises the verification information; and
determining that a voiceprint feature of the third voice information meets the preset condition.

21. The electronic device according to claim 20, wherein when the instructions are executed by the one or more processors, the electronic device is enabled to perform the following step:
before randomly generating the verification information, prompting the user to enter the verification information.

22. The electronic device according to claim 20 or 21, wherein the verification information comprises a digit and/or a letter.

23. The electronic device according to any one of claims 16 to 22, wherein the electronic device is a smart speaker.
